# FASCICULE DE BREVET EUROPEEN

(11) **EP 3 610 562 B1**
(45) Date de publication et mention de la délivrance du brevet: **06.12.2023**
(21) Numéro de dépôt: 18715731.8
(22) Date de dépôt: 10.04.2018
(51) Int. Cl.: H02K 3/52, H02K 5/15, H02K 5/22

(54) **MOTEUR ÉLECTRIQUE SYNCHRONE ET PROCÉDÉ D'ASSEMBLAGE DE CE MOTEUR ÉLECTRIQUE**
ELEKTRISCHER SYNCHRONMOTOR UND VERFAHREN ZUR MONTAGE DES BESAGTEN ELEKTRISCHEN MOTORS
SYNCHRONOUS ELECTRIC MOTOR AND METHOD FOR ASSEMBLING SAID ELECTRIC MOTOR

(30) Priorité: 10.04.2017 FR 1753108
(43) Date de publication de la demande: 19.02.2020
(73) Titulaire: Somfy Activites SA, 74300 Cluses (FR)
(72) Inventeur: PEILLEX, Julien, 74300 Cluses (FR); BRION, Pierre, 74300 Chatillon Sur Cluses (FR); TOLLANCE, Thierry, 74930 Pers-Jussy (FR)
(74) Mandataire: Lavoix
(86) Numéro de dépôt international: PCT/EP2018/059112
(87) Numéro de publication internationale: WO 2018/189150

(56) Documents cités:
- EP-A1- 3 125 412
- US-A1- 2006 138 883
- US-A1- 2016 301 277

## Description

La présente invention concerne un moteur électrique synchrone ainsi qu'un procédé d'assemblage de ce moteur électrique.

De manière générale, la présente invention concerne le domaine des dispositifs d'occultation comprenant un dispositif d'entraînement motorisé mettant en mouvement un écran entre au moins une première position et une deuxième position.

L'invention concerne plus généralement le domaine des moteurs électriques, tels que les moteurs synchrones à commutation directe sans balais, en particulier destinés à être utilisés dans des actionneurs électromécaniques tubulaires destinés à entraîner en rotation un tube d'enroulement sur lequel s'enroule un écran.

La structure de tels moteurs est la suivante. Ces moteurs comprennent un stator et un rotor mobile en rotation par rapport au stator positionnés de manière coaxiale autour d'un axe de rotation. Le rotor comprend un corps de rotor muni d'éléments magnétiques, tels que des aimants permanents, répartis sur la surface extérieure du rotor. Les éléments magnétiques du rotor sont entourés par le stator. Le stator est formé par un noyau de stator comprenant des éléments polaires supportant des bobinages ou bobines, les éléments polaires étant répartis sur une paroi périphérique du stator, en particulier sur une paroi interne du corps de stator. Ce moteur est dit à rotor interne.

Les bobines du stator sont chacune formée par l'enroulement d'un fil électriquement conducteur autour d'un élément polaire, formant support. Les bobines sont destinées à être parcourues sélectivement par un courant électrique d'alimentation, fourni par une source externe, afin de générer une induction magnétique qui entraîne le rotor en rotation. La source externe est raccordée aux bobines par des connecteurs dédiés.

A titre d'exemple, la demande de brevet US 2006/0138883 A1 divulgue un moteur électrique destiné à être utilisé dans un système de direction assisté d'un véhicule automobile.

Plusieurs méthodes sont connues pour raccorder électriquement les bobines à ces connecteurs, mais ces méthodes ne donnent pas entière satisfaction.

Sur certains moteurs, les extrémités du fil formant chaque bobine sont connectées à des cosses métalliques insérées dans une paroi en plastique solidaire des parois du stator, par exemple un surmoulage plastique d'un paquet de tôles formant le corps de stator.

Un inconvénient de cette méthode est que la paroi plastique est encombrante et nécessite un volume important pour pouvoir intégrer la connectique. Elle n'est donc pas applicable dans le cas où le moteur est assujetti à des contraintes de taille. C'est particulièrement le cas des moteurs de forme tubulaire et dont le diamètre est contraint, par exemple inférieur ou égal à 50mm, voire inférieur ou égal à 40mm, notamment de l'ordre de 36mm, de sorte à ce qu'il puisse être inséré dans un tube d'enroulement dont le diamètre intérieur est de l'ordre de 40mm.

Selon une autre approche connue, les extrémités de fil sont directement connectées à un circuit imprimé fixé directement sur le stator ou sur une pièce intermédiaire, elle-même fixée à une extrémité du stator. Le procédé de fabrication doit alors inclure des étapes supplémentaires de soudure des fils sur le circuit imprimé. La complexité et le coût du moteur s'en trouvent alors augmentés.

De plus, la présence du circuit imprimé devient dans ce cas indispensable pour connecter les bobines. Or, il existe des applications, comme les moteurs sans capteurs de champ, dits moteurs « sensorless » en langue anglaise, dans lesquelles un tel circuit imprimé n'est pas nécessaire. Utiliser un circuit imprimé uniquement pour réaliser la connexion est alors excessif.

C'est à ces inconvénients qu'entend plus particulièrement remédier l'invention en proposant un dispositif de connexion de bobines pour un stator de moteur électrique qui soit plus simple à fabriquer.

A cet effet, l'invention concerne un moteur synchrone comme défini dans la revendication 1.

Le moteur électrique comporte en outre un circuit imprimé dont un substrat rigide est intercalé entre la pièce de support et le flasque.

Grâce à l'invention, les fonctions liées à la connexion sont réalisées sur une pièce de support dédiée et non pas directement sur le stator ou par l'intermédiaire d'un circuit imprimé.

Selon des aspects avantageux mais non obligatoires de l'invention, un tel moteur peut incorporer une ou plusieurs des caractéristiques des revendications 2 à 7, prises isolément ou suivant toute combinaison techniquement admissible.

Selon un autre aspect, l'invention concerne un procédé de fabrication d'un moteur électrique synchrone tel que défini dans la revendication 8.

L'invention sera mieux comprise et d'autres avantages de celle-ci apparaîtront plus clairement à la lumière de la description qui va suivre, d'un mode de réalisation d'un moteur électrique donné uniquement à titre d'exemple et faite en référence aux dessins annexés dans lesquels :
- la figure 1 est une représentation schématique, selon une vue éclatée, d'un moteur électrique selon l'invention ;
- la figure 2 est une représentation schématique d'un circuit de commande du moteur électrique de la figure 1 ;
- la figure 3 est une représentation schématique, selon une vue rapprochée, d'un flasque et d'une pièce de support du stator du moteur électrique de la figure 1 ;
- la figure 4 est une représentation schématique, selon une vue en perspective, du stator de la figure 3 ;
- la figure 5 est une représentation schématique, selon une vue de dessus, du stator de la figure 4 ;

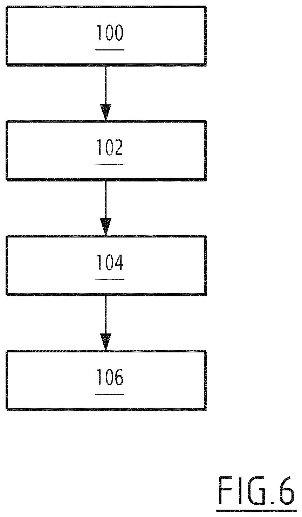

- la figure 6 est un ordinogramme d'un procédé d'assemblage du moteur électrique de la figure 1 selon des modes de réalisation de l'invention ;
- les figures 7 et 8 sont des représentations schématiques d'un autre mode de réalisation du moteur électrique des figures 1 à 5.

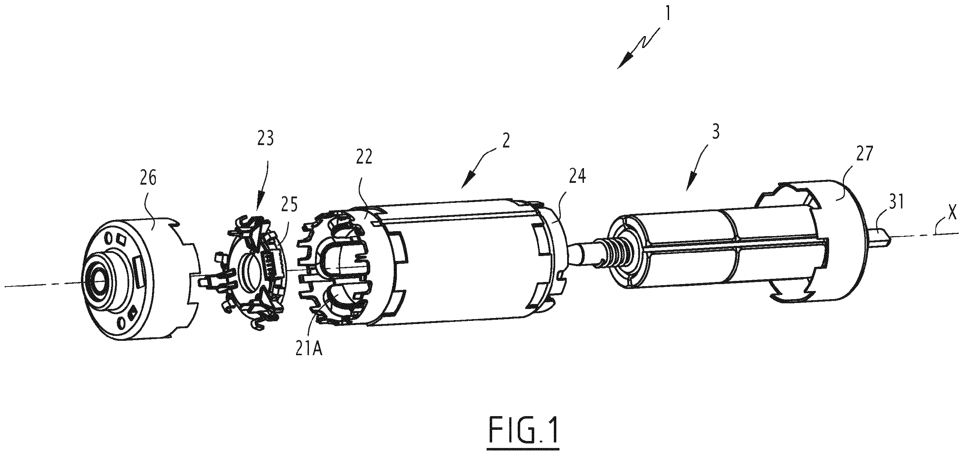

La figure 1 représente un moteur électrique 1 synchrone, ici de type à commutation directe sans balai et à courant continu, aussi connu sous l'acronyme BLDC, pour « Brushless direct current » en langue anglaise.

Le moteur 1 comporte un stator 2 et un rotor 3, mobile par rapport au stator 2 autour d'un axe de rotation X.

Le stator 2 comporte un corps creux de forme tubulaire, ici en forme d'un cylindre dont l'axe de révolution est confondu avec l'axe X. Dans une configuration assemblée du moteur 1, le rotor 3 est reçu à l'intérieur du stator 2 en étant positionné de façon coaxiale à de l'axe X. Un entrefer sépare le rotor 3 du stator 2.

Par exemple, le diamètre du corps creux est inférieur ou égal à 10cm ou, de préférence, inférieur ou égal à 5cm.

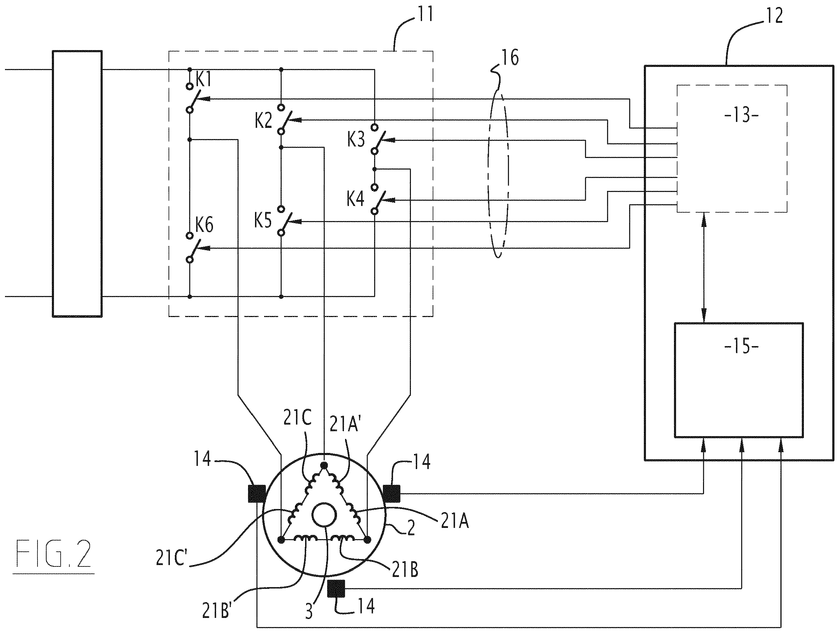

Le moteur 1 est destiné à être alimenté par un courant électrique triphasé, dit courant d'alimentation, généré au moyen d'un circuit de commande, illustré à la figure 2. Par exemple, ce courant triphasé est généré à partir d'une tension électrique continue au moyen d'une méthode de modulation de largeur d'impulsion.

Le courant d'alimentation est ainsi formé de trois courants électriques déphasés l'un par rapport à l'autre, correspondant chacun à une phase du courant d'alimentation, ces phases étant par exemple déphasées de 120° l'une par rapport à l'autre.

Le stator 2 comporte des électroaimants destinés à générer un champ magnétique tournant pour entraîner en rotation le rotor 3. Les électroaimants sont disposés à l'intérieur du stator 2, par exemple sont répartis sur une circonférence de la face interne du corps creux, autour de l'axe X.

Chaque électroaimant comporte une bobine, ou solénoïde, formée par un ou plusieurs enroulements, ou spires, d'un fil électriquement conducteur autour d'une armature. Les armatures sont, par exemple, des éléments polaires répartis sur la circonférence interne du corps de stator et solidaires du corps de stator. Le fil conducteur est par exemple réalisé en cuivre émaillé. Il présente ici un diamètre inférieur ou égal à 2mm, de préférence inférieur ou égal à 1mm, de préférence inférieur ou égal à 0.75mm.

Chaque bobine est destinée à être alimentée électriquement par une phase du courant électrique d'alimentation triphasé.

Dans cet exemple, le stator 2 comporte six bobines, qui sont réparties sur la circonférence interne du corps creux avec un angle de 60° entre deux bobines adjacentes, cet angle étant mesuré par rapport à l'axe X. Chaque phase électrique du courant d'alimentation alimente donc deux bobines distinctes. En pratique, les bobines correspondant à une même phase sont disposées l'une en face de l'autre au sein du stator 2.

Comme illustré à la figure 2, les bobines associées à la première phase du courant d'alimentation sont notées 21A et 21A', les bobines associées à la deuxième phase du courant d'alimentation sont notées 21B et 21B' et les bobines associées à la troisième phase du courant d'alimentation sont notées 21C et 21C'. Dans ce qui suit, ces bobines sont aussi désignées de façon générale par la référence générique 21. A la figure 2, les bobines 21 sont illustrées de sorte à représenter leur interconnexion électrique et non pas leur disposition spatiale au sein du rotor 2.

De manière connue, le circuit de commande du moteur 1 inclut un module de commutation 11 qui comporte une pluralité de commutateurs de puissance notés K1, K2, K3, K4, K5 et K6, qui, en fonction de signaux de commande 16 reçus, alimentent séquentiellement les bobines 21 du stator 2 de manière à créer un champ magnétique tournant. Les séquences de commande sont générées en fonction de la position relative du rotor 3 par rapport aux bobines 21 du stator 2. Ainsi, le positionnement des commutateurs K1 à K6 à un instant donné constitue une commande qui, par l'intermédiaire des phases d'alimentation du moteur 1, détermine son fonctionnement.

Le module de commutation 11 est commandé par un dispositif de contrôle 12, qui comprend un module 13 de génération de signaux de commande. Chacun de ces modules comprend des moyens matériels et logiciels agencés et configurés pour que le dispositif de contrôle mette en oeuvre le procédé de génération de signaux de commande pour gérer le fonctionnement du moteur tel qu'il sera décrit ci-dessous.

Le module 13 de génération de signaux de commande récupère notamment par l'intermédiaire d'une interface 15 de réception de signaux, des informations issues de capteurs de champ magnétique 14, positionnés de manière fixe par rapport au stator 2. De préférence, ces capteurs 14 sont des capteurs à effet Hall à sortie binaire. De préférence, ces capteurs 14 sont positionnés à 120° ou 60° l'un de l'autre à l'intérieur du stator 2.

Alternativement, le module 13 de génération de signaux de commande estime la position sans capteurs, par exemple ainsi que décrit dans la demande EP3014758.

Le rotor 3 comporte un corps de rotor qui est pourvu d'éléments magnétiques, non illustrés, tels que des aimants permanents, qui sont disposés sur la périphérie du corps de rotor. Dans une configuration assemblée du moteur 1, les éléments magnétiques sont entourés par le stator 2 pour interagir avec le champ magnétique tournant créé par les bobines 21 du stator 2. Ces éléments magnétiques sont par exemple des aimants en ferrite.

Le rotor 3 comporte aussi un arbre de sortie 31, lequel entraîne un réducteur, et au travers du réducteur, un arbre de sortie d'un actionneur électromécanique. Ce dernier est configuré pour entraîner en rotation une charge mécanique lorsque le rotor 3 est mis en rotation par le champ magnétique tournant. Par exemple, la charge mécanique est un volet roulant, un store ou un écran.

Le moteur 1 est ainsi destiné à être utilisé dans un actionneur électromécanique commandable.

Le stator 2 comporte un premier flasque 22 disposé sur une première extrémité du corps creux tubulaire, en particulier en appui sur son paquet de tôles formant le corps creux du stator et un deuxième flasque 24 disposé à l'extrémité opposée du corps creux tubulaire du stator 2. Une pièce de support 23 est également rapportée sur le stator du côté du premier flasque 22. Ainsi, la pièce de support 23 fait partie du stator 2.

Le moteur 1 comporte également des bols d'extrémité 26 et 27, ou couvercles, qui sont fixés aux extrémités opposées du corps creux tubulaire et qui recouvrent les flasques, respectivement, 22 et 24 de manière à refermer l'ensemble rotor-stator vis-à-vis de l'extérieur et ainsi à protéger les bobines 21 du stator 2. Le bol 26 comporte ici des orifices d'accès au stator, en particulier des orifices de connexion électrique, par exemple pour l'alimentation des bobines du stator 2 depuis le circuit de commande. Les bols 26 et 27 comportent également un orifice central, concentrique avec l'axe X, pour autoriser le passage de l'arbre du corps de rotor. Les bols 26 et 27 sont ici fabriqués en matière métallique. Ils peuvent comprendre un renfoncement cylindrique pour la réception d'un palier ou d'un roulement dans lequel est maintenue l'extrémité du corps de rotor traversant le bol 26 ou 27.

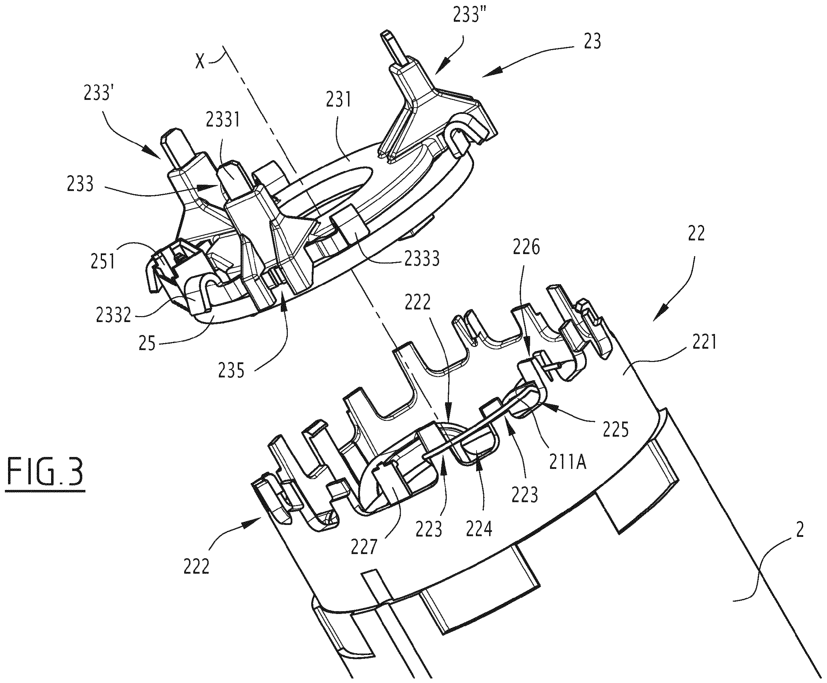

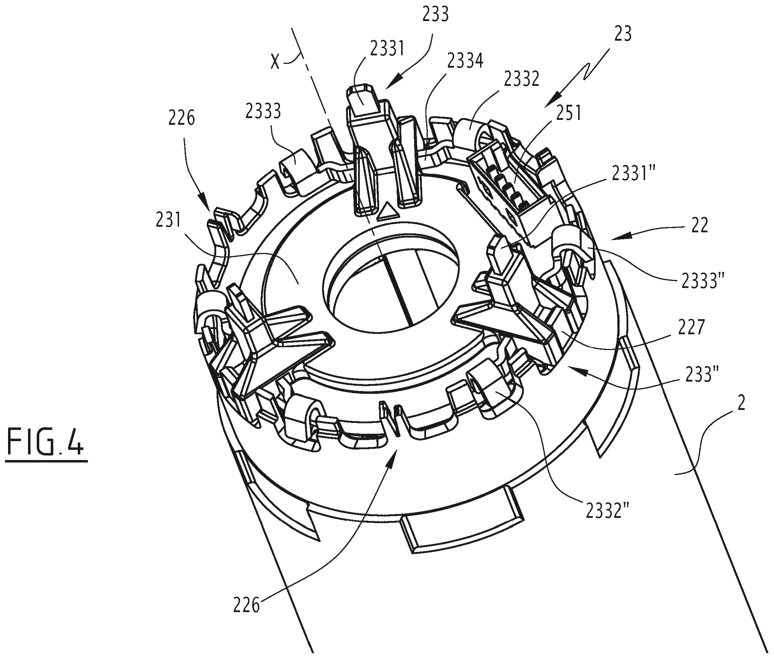

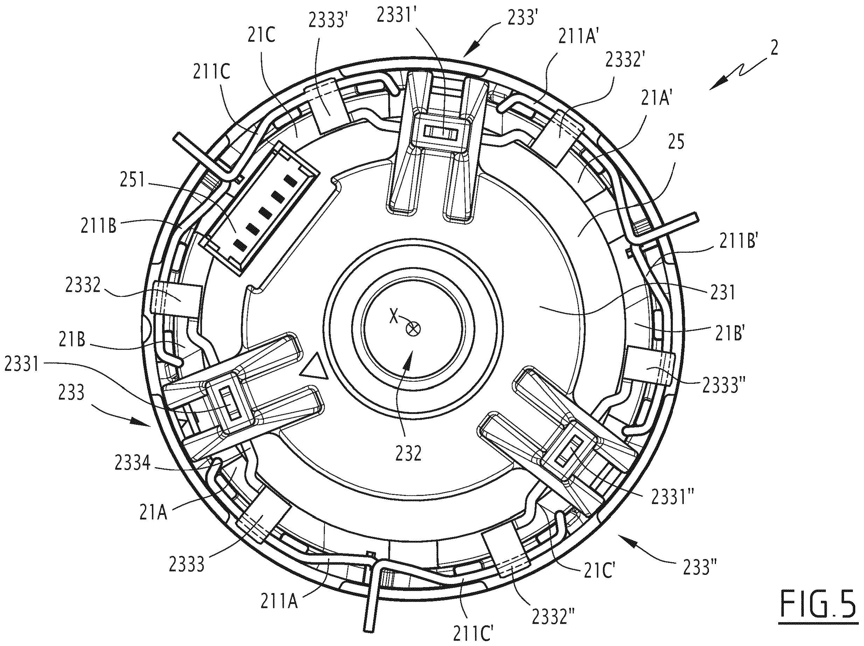

Les figures 3 à 5 représentent plus en détail le flasque 22 et la pièce de support 23. Dans l'exemple des figures 4 et 5, la pièce de support 23 est fixée au flasque 22 d'une manière qui sera expliquée plus loin.

Les bobines 21 sont ici connectées aux trois phases du courant d'alimentation selon un montage en triangle, comme représenté sur la figure 2.

Dans cet exemple à six bobines, les bobines 21 associées à une même phase électrique du courant d'alimentation sont connectées en série l'une avec l'autre. Elles forment ainsi une paire de bobines. Chaque paire de bobines ainsi formée est connectée, à chaque extrémité, à une extrémité d'une autre paire de bobines associées à une phase électrique différente du courant d'alimentation.

A titre d'exemple, les bobines 21A et 21A' sont connectées en série et sont destinées à être alimentées par la première phase du courant d'alimentation. Les bobines 21A et 21A' sont formées par enroulement successif d'un même fil conducteur autour de deux armatures distinctes disposées sur le stator 2. Les deux bobines 21A et 21A' sont ainsi connectées en série au moyen d'une portion intermédiaire du fil conducteur, non illustrée, qui s'étend ici au niveau de l'extrémité opposée du corps du stator 2. Avantageusement, le flasque 24 comporte des moyens de guidage et de maintien de cette portion de fil intermédiaire.

On note 211A et 211A' des portions d'extrémité opposées de ce premier fil conducteur. Ces portions d'extrémité sont destinées à être connectées à des portions d'extrémité d'une autre paire de bobines 21 et au circuit de commande extérieur, par l'intermédiaire de la pièce de support 23. A cet effet, elles s'étendent sur la première extrémité du stator 2.

Dans cet exemple, après la fabrication des bobines 21A et 21A' par enroulement, les portions de fil 211A et 211A' dépassent hors du corps creux du stator du côté de sa première extrémité.

Les autres bobines 21 sont connectées de façon analogue. Notamment, les bobines 21B et 21B' sont réalisées à partir d'un deuxième fil conducteur et les bobines 21C et 21C' sont réalisées à partir d'un troisième fil conducteur. Dans ce qui suit, on note 211B et 211B' les portions d'extrémités de fil conducteur associées aux bobines 21B et 21B' et on note 211C et 211C' les portions d'extrémités de fil conducteur associées aux bobines 21C et 21C'.

Ainsi, dans cet exemple, pour assurer la connexion des bobines suivant le montage en triangle, les portions 211A et 211B sont connectées entre elles à un premier point de connexion commun, les portions 211C et 211A' sont connectées entre elles à un deuxième point de connexion commun et les portions 211B' et 211C' sont connectées entre elles à un troisième point de connexion commun. Les premier, deuxième et troisième points de connexion communs sont reliés, respectivement, à la première phase, à la deuxième phase et à la troisième phase du courant d'alimentation.

En variante, le stator 2 comporte seulement trois bobines 21, chacune associée à une des trois phases électriques. Dans ce cas, les portions 211A et 211A' correspondent aux extrémités opposées d'une même bobine 21A, la bobine 21A' étant omise. Il en va de même pour les portions 211B et 211B' et pour les portions 211C et 211C'.

Le flasque 22 est monté solidaire à la première extrémité du corps du stator 2. Le flasque 22 comporte un corps 221 rigide, solidarisé au stator 2.

Le flasque 22 est réalisé en matière électriquement isolante, par exemple du plastique, tel que le polytéréphtalate de butylène ou le polyamide 66.

Selon ce mode de réalisation, le flasque 22 comporte également des zones de maintien 222 qui permettent d'assurer le maintien des portions d'extrémité de fil pour faciliter leur connexion.

Chaque zone de maintien 222 est associée à une portion d'extrémité de fil. Les zones de maintien 222 sont ici au nombre de six, c'est-à-dire autant que les portions d'extrémité de fil 211A, 211A', 211B, 211B', 211C et 211C' présentes au niveau du flasque 22.

Chaque zone de maintien 222 comporte un ou plusieurs rebords 223 en forme de gorge ou de rainure sur l'extérieur du flasque, qui reçoivent une portion d'extrémité de fil conducteur correspondante. Ces rebords 223 s'étendent chacun sur une partie du pourtour du flasque 22. Ainsi, la portion de fil reçue dans un rebord 223 s'étend le long d'une partie de la périphérie du flasque 22.

Ici, le flasque 22 présente une forme cylindrique à base circulaire. Les gorges 223 décrivent donc chacune une portion d'arc de cercle dans un plan géométrique perpendiculaire à l'axe X. La largeur des gorges 223 est choisie en fonction du diamètre du fil conducteur. Elle est ici identique pour toutes les gorges 223 du flasque 22.

Les zones 222 comprennent également un ou plusieurs évidements 224 ménagés dans le flasque. Par exemple, au sein de chaque zone 222, un évidement 224 est ménagé entre deux gorges 223. Dans une configuration assemblée du moteur 1, la portion d'extrémité de fil correspondante associée à cette zone 222 est ici reçue dans les deux gorges 223 et s'étend au-dessus de l'évidement 224.

Le flasque 22 comporte également des organes de fixation 226 destinés au maintien de fixer les bouts, ou zones terminales, des portions d'extrémité 211A, 211A', 211B, 211B', 211C et 211C' des fils conducteurs ici reçues dans les zones 222. Chaque organe de fixation 226 comporte une pince comprenant deux branches resserrées l'une contre l'autre par élasticité. Par exemple, ces branches sont réalisées d'un seul tenant avec le reste du flasque 22.

Les bouts des portions d'extrémité 211A, 211A', 211B, 211B', 211C et 211C' sont ici pincées et maintenues dans ces organes de fixation 226, entre les deux branches des pinces et s'étendent perpendiculairement au pourtour du flasque 22.

Dans cet exemple, un même organe de fixation 226 fixe deux portions d'extrémité de fil distinctes et appartenant à des phases différentes.

La pièce de support 23 comporte un corps 231 et des connecteurs électriques 233, 233' et 233" portés par ce corps 231. Le corps 231 est de forme globalement circulaire et plane et est percé d'un évidement central 232 pour autoriser le passage du rotor 3 lorsque le moteur 1 est dans une configuration assemblée. La pièce de support 23 comprend également des enveloppes 234 dont chacune entoure au moins en partie un des connecteurs 233, 233' et 233" et qui sont ici formées d'un seul tenant avec la partie principale 231. Par exemple, chaque enveloppe 234 est surmoulée par-dessus une partie du connecteur 233, 233' et 233" auquel elle est associée.

La pièce de support 23 comporte deux faces opposées, ici une face supérieure et une face inférieure. Les connecteurs 233, 233' et 233" sont supportés par la face supérieure.

De préférence, le corps 231 et les enveloppes 234 sont réalisés en matière plastique par thermoformage. Par exemple, on utilise du polytéréphtalate de butylène, ou du polyamide 66.

Les connecteurs 233, 233' et 233" sont disposés sur le pourtour du corps 231, en étant séparés deux à deux d'un angle de 120°, mesuré dans un plan géométrique perpendiculaire à l'axe X2. Dans cet exemple, les connecteurs 233, 233' et 233" sont identiques. Aussi, seul le connecteur 223 est décrit en détail dans ce qui suit. Sur les figures 4 et 5, les éléments des connecteurs 233' et 233" qui sont analogues aux éléments du connecteur 233 portent la même référence numérique, à laquelle est ajouté, respectivement, le symbole « ' » et le symbole « " ».

Le connecteur 233 comporte une cosse 2331 d'alimentation droite et deux lames recourbées 2332 et 2333 qui sont disposées de part et d'autre de la cosse 2331 et qui sont reliées électriquement à la cosse 2331, ici par une portion de raccordement 2334.

Le connecteur 233 est ici réalisé d'un seul tenant.

A titre d'illustration, le connecteur 233 est réalisé en matière métallique, de préférence en un alliage cuivre-zinc, tel que le CuZn33 R480, pré étamé à chaud avec une couche d'étain d'épaisseur comprise entre 1µm et 3µm.

Dans cet exemple, chaque lame recourbée 2332, 2333 présente une forme de U retourné dont une première branche est jointe à la portion de raccordement 2334. Lorsque le moteur 1 est dans une configuration assemblée, une deuxième branche de la forme en U retourné s'étend par-dessus le bord périphérique du flasque 22 et son extrémité distale est repliée et est reçue au niveau d'un évidement 224. Ainsi, lors de l'assemblage du moteur 1, la pièce de support 23 peut être enfilée sur le flasque 2 par-dessus les portions d'extrémité des fils conducteurs par un mouvement de translation selon l'axe X.

La cosse 2331 s'étend parallèlement à l'axe X. Dans cet exemple, lorsque le moteur 1 est dans la configuration assemblée, les cosses 2331 dépassent hors du bol 26 par les orifices précédemment décrits.

Chaque connecteur 233, 233' et 233" connecte deux à deux des bobines associées à des phases distinctes au moyen des lames recourbées 2332 et 2333. Chaque cosse 2331 est destinée à être raccordée à une phase électrique du courant d'alimentation, ici acheminé par un câble électrique dédié.

Chaque connecteur 233, 233' et 233" correspond ainsi à un point de connexion commun du montage en triangle des bobines 21.

Dans l'exemple illustré aux figures, les connecteurs 233, 233' et 233" sont placés sur la pièce de support 23 de telle sorte que la portion de raccordement 2335 est tournée vers l'intérieur du flasque 22. Ainsi, dans cet exemple, le flasque 22 et la pièce de support 23 forment alors un système pour connecter électriquement les bobines 21 afin d'assurer leur alimentation en courant. La pièce de support 23 est fixée au flasque 22, sans degré de liberté.

Selon une variante non illustrée, les connecteurs 233, 233' et 233", et en particulier les lames recourbées 2332, 2333 sont disposées différemment, par exemple en étant ouvertes vers le centre de la pièce de support 23. Dans cette variante, les extrémités 211A, 211A', 211B, 211B', 211C et 211C' de fils des bobines se s'étendent pas autour du flasque, mais cheminent vers l'intérieur du rotor, en particulier par une opération spécifique de l'appareil de bobinage décrit plus loin. De cette manière, on évite que d'une part que les extrémités des lames recourbées 2332, 2333 ne débordent à l'extérieur du flasque 22, ce qui pourrait gêner le positionnement du bol 26. D'autre part, on évite la tension des fils avant leur soudage au niveau des lames recourbées 2332, 2333.

La pièce de support 23 est une pièce rapportée distincte du flasque 22 et qui est fixée au flasque 22 sans degré de liberté.

Cette fixation est préférentiellement réalisée par encliquetage. A cet effet, la pièce de support 23 et le flasque 22 comportent des organes de fixation de forme complémentaires. Par exemple, le flasque 22 contient des pattes 227 et la pièce de support 23 comporte des logements 235, ici ménagés à la base des enveloppes 234. Chaque logement possède une forme complémentaire à celle des plots de fixation 227. En particulier, la pièce de support 23 est en butée sur l'extrémité du flasque tournée vers le bol 26.

Dans cet exemple, le moteur 1 comprend un circuit imprimé 25, incluant un substrat rigide sur lequel sont ménagées des pistes électriquement conductrices et des composants électroniques. Ces composants sont par exemple des capteurs de champ magnétique qui permettent de mesurer le champ magnétique tournant créé par les bobines 21.

Le circuit imprimé 25 est fixé sur la face inférieure du corps 231 de la pièce de support 23, par exemple par soudage à ultrasons ou par soudage à chaud.

A cet effet, la face inférieure comporte des éléments d'accrochage du circuit imprimé 25. Ainsi, le circuit imprimé 25, s'il est nécessaire au fonctionnement du moteur 1, est maintenu axialement par la face inférieure de la pièce de support. Le diamètre de l'ensemble pièce de support-circuit imprimé n'est pas augmenté au-delà du diamètre maximum de l'un ou l'autre de la pièce de support 23 ou du circuit imprimé 25, comme ce serait le cas avec des éléments d'accroche latéraux.

Par exemple, le corps 231 de la pièce de support 23 comporte des picots plastiques destinés à être insérés dans des orifices correspondants formés sur le circuit 25, puis écrasés à chaud pour maintenir le circuit imprimé 25 et la pièce de support 23 l'un à l'autre.

Le circuit 25 comporte ici un boîtier de connexion 251, disposé sur une face supérieure du substrat tournée vers la pièce de support 23 et étant connecté aux composants du circuit imprimé 25 par l'intermédiaire des pistes du circuit 25. Ce boîtier de connexion 251 permet le raccordement des composants au circuit de commande du moteur 1. La pièce de support 23 comprend une découpe sur son bord circulaire permettant le passage de ce boîtier de connexion 251 lorsque le circuit imprimé 25 est attaché à la pièce de support 23.

Ici, le bol 26 comporte avantageusement un orifice de forme complémentaire à celle du boîtier 251 permettant d'accéder à celui-ci depuis l'extérieur du moteur 1.

Un avantage du moteur 1 est donc que les fonctions liées à la connexion sont réalisées sur une pièce de support 23 dédiée et non pas directement sur le stator 2 ou par l'intermédiaire du circuit 25.

En outre, les zones 222 permettent d'étendre et de maintenir les portions d'extrémité de fil sur le pourtour du flasque, ce qui facilite la construction du moteur 1 et aussi permet de disposer les connecteurs en périphérie du stator 2, à l'écart de l'axe X.

De plus, comme le circuit 25 est destiné à être fixé sur la pièce intermédiaire et non pas directement sur le stator et que la connexion des bobines est réalisée indépendamment de ce circuit 25, alors l'absence du circuit 25 ne pénalise pas la construction du moteur 1.

Un exemple d'un procédé d'assemblage du moteur 1 est maintenant décrit en référence à la figure 5 et à l'aide des figures 1 à 4.

Initialement, le stator 2 est fourni avec le flasque 22 solidarisé sur une des extrémités du stator.

Ensuite, lors d'une étape 100, les bobines 21 sont formées par enroulement de fils conducteurs autour des armatures du stator 2.

Dans cet exemple, chaque paire de bobines associées à une même phase électrique est formée au moyen d'un même fil. Ainsi, trois fils sont utilisés pour former les bobines 21.

Par exemple, les bobines 21A et 21A' sont formées l'une après l'autre par enroulement d'un premier fil autour de deux armatures distinctes. Une fois l'enroulement terminé, les parties d'extrémité opposées 211A et 211A' de ce fil conducteur sont amenées et se situent au niveau de la première extrémité du stator 22. De façon analogue, les bobines 21B et 21B' sont réalisées par enroulement d'un deuxième fil conducteur, et les bobines 21C et 21C' sont réalisées par enroulement d'un troisième fil conducteur.

L'enroulement est ici réalisé au moyen d'un appareil de bobinage automatique à aiguilles, de préférence simultanément pour les trois fils conducteurs.

Par exemple, l'appareil de bobinage à aiguilles comporte un support d'aiguilles qui est pourvu d'une tête de bobinage mobile montée à l'extrémité d'un arbre apte à être déplacé par un mouvement de va-et-vient dans le stator 2 le long de l'axe X. Cette tête de bobinage comporte plusieurs aiguilles de bobinage qui sont agencées pour glisser à l'intérieur de la tête de bobinage. Chaque aiguille de bobinage est associée à un fil conducteur devant être enroulé, ce fil étant déroulé depuis une réserve correspondante. A cet effet, chaque aiguille de bobinage comprend un canal axial par lequel passe le fil conducteur à enrouler.

Lorsque le support d'aiguilles effectue un mouvement de va-et-vient rectiligne le long de l'axe X à l'intérieur du stator 2, il atteint, de façon répétée, des positions dites de point mort, situées aux extrémités opposées de sa trajectoire rectiligne. A chacune de ces positions de point mort, le support d'aiguilles tourne dans un sens prédéfini avec un angle choisi qui correspond au nombre de spires de l'enroulement devant être réalisé sur l'armature des bobines. Le fil conducteur suit ainsi le chemin que l'aiguille de bobinage accomplit dans son mouvement. Les enroulements des bobines sont ainsi formés graduellement.

L'appareil de bobinage à aiguilles est par exemple mis en mouvement au moyen d'actionneurs commandables pilotés par une unité de commande électronique qui exécute un programme de fabrication prédéfini.

A l'issue de l'étape 100, les bobines 21 sont fabriquées et les portions d'extrémité de fil 211A, 211A', 211B, 211B', 211C, 211C' correspondantes s'étendent au niveau de la première extrémité du stator 2, en étant par exemple maintenues en position grâce aux aiguilles de l'appareil de bobinage ou étant attachées au flasque 22, en étant avantageusement fixées grâce aux grâce aux organes de fixation 226.

Pour ce dernier cas, chaque portion d'extrémité 211A, 211A', 211B, 211B', 211C, 211C' est déplacée le long de l'extérieur du flasque puis insérée entre les branches de la pince des organes de fixation, les zones terminales des extrémités dépassant radialement par rapport au pourtour du flasque 22. Ce déplacement est ici assuré grâce à une programmation spécifique de l'appareil de bobinage.

Puis, lors d'une étape 102, la pièce de support 23 est solidarisée au flasque 22. Pour ce faire, dans cet exemple, la pièce de support 23 est d'abord positionnée au-dessus du flasque 22 de telle sorte que les logements 235 soient alignés avec les plots 227 et éventuellement que les lames 2332 et 2333 soient alignées avec les évidements 224 correspondants.

Optionnellement, le circuit imprimé 25 est préalablement fixé sur la pièce de support 23, en solidarisant le substrat du circuit 25 à la face inférieure du corps 231, comme expliqué précédemment.

La pièce de support 23 est ensuite déplacée par translation le long de l'axe X pour être solidarisée au flasque 22 grâce à l'action par encliquetage des plots 227 avec les logements 235, lors d'une étape 104. Lors de ce déplacement, les lames recourbées des connecteurs 2332 et 2333, 2332' et 2333', 2332" et 2333" interceptent les portions d'extrémités 211A, 211A', 211B, 211B', 211C, 211C' correspondantes et exercent un appui sur ces derniers pour les amener vers les zones 222 respectives dans le cas où ces extrémités sont maintenues sur le flasque.

Puis, lors d'une étape 106, les connecteurs 233 sont raccordés électriquement aux bobines 21 par soudage.

Préalablement, les lames recourbées 2332, 2333 sont repliées pour enserrer la portion de fil correspondante, en exerçant un effort pour déformer ces lames de manière à enserrer la partie de fil correspondante. La soudure est alors réalisée une fois que la lame est repliée.

Si nécessaire, les portions de fil conducteur qui dépassent des pinces 236 perpendiculairement à la circonférence du flasque 22 sont alors sectionnées. Cette méthode a pour avantage que les portions de fil sont maintenues en place sur le flasque grâce aux gorges 223, permettant une connexion facilitée de la pièce de support 23.

Dans le deuxième mode de réalisation, dans lequel les lames recourbées sont ouvertes vers le centre de la pièce de support, les extrémités de fil sont rapportées au niveau de ces lames recourbées après la mise en place de la pièce de support sur le flasque, par une programmation correspondante de l'appareil de bobinage. En fixant la pièce de support 23 avant de déplacer les portions d'extrémité de fil dans les lames recourbées, on évite d'avoir à laisser les portions d'extrémité 211A, 211A', 211B, 211B', 211C, 211C' tendues sur le flasque ce qui les fragilise. On limite ainsi le risque de casser des fils de bobines lors de l'opération de soudure des lames recourbées sur les fils de bobines.

Ensuite, lors d'étapes ultérieures, l'assemblage du moteur 1 est finalisé, notamment par insertion du rotor 3 dans le corps du stator 2 et par fixation des bols 26 et 27 sur les extrémités du stator 2.

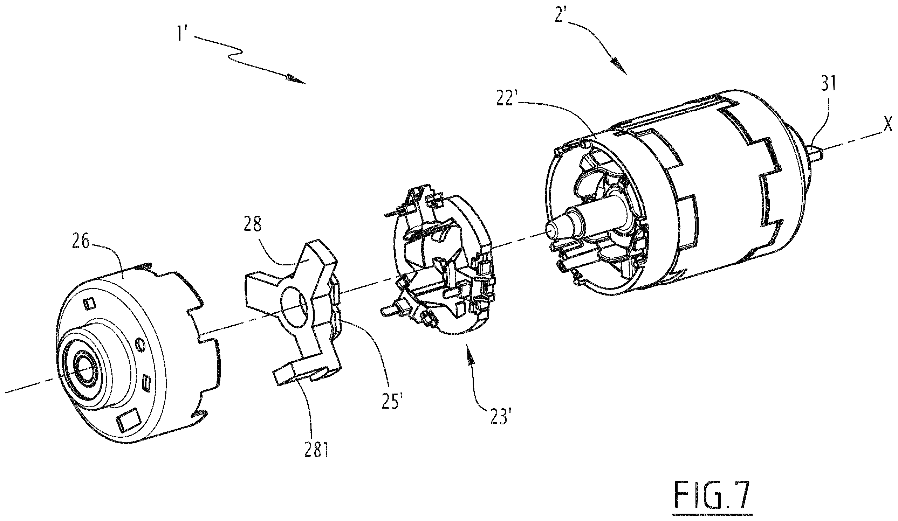

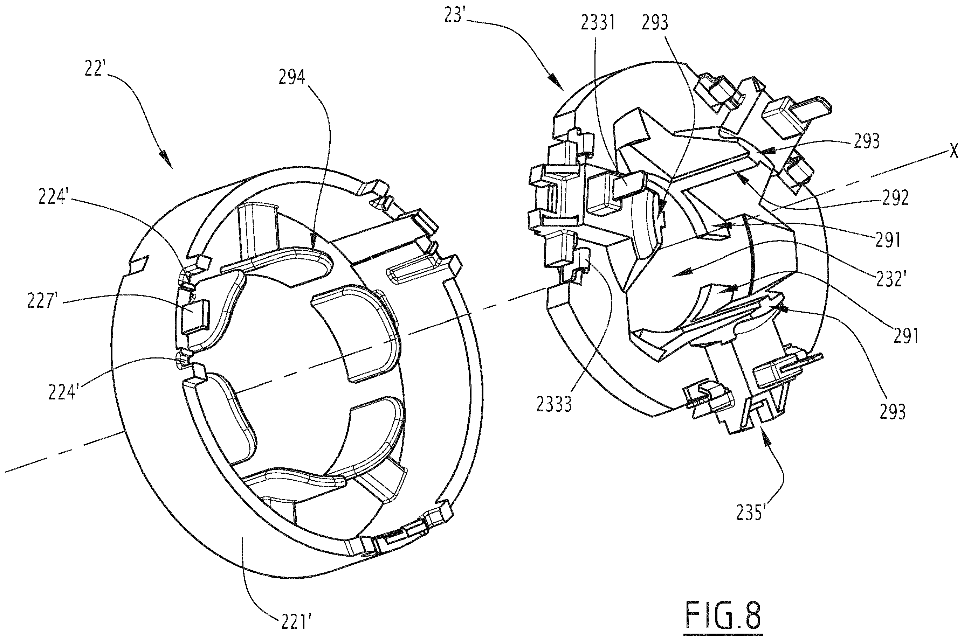

Les figures 7 et 8 représentent un moteur 1' selon un deuxième mode de réalisation de l'invention.

Les éléments du moteur 1' qui sont analogues au premier mode de réalisation portent les mêmes références que ceux du moteur 1, et les éléments qui malgré d'éventuelles différences structurelles jouent le même rôle que ceux du moteur 1 précédemment décrit portent la même référence que ceux du moteur 1 mais augmentée du symbole prime « ' ». Ces éléments ne sont pas décrits en détail, dans la mesure où la description ci-dessus peut leur être transposée.

Le stator 2' du moteur 1' selon le deuxième mode de réalisation diffère du stator 2 précédemment décrit notamment en ce que :
- le flasque 22' présente une forme allégée et plus compacte,
- la forme de la pièce de support 23' est modifiée,
- une pièce additionnelle 28 servant à supporter le circuit imprimé 25' est intercalée entre la pièce de support 23' et le bol 26.

Plus précisément, la pièce additionnelle 28 comporte au moins un bras radial, ici trois bras radiaux coplanaires, étendus perpendiculairement à l'axe X et disposés en étoile autour d'un orifice central de la pièce 28 qui est centré sur l'axe X et traversé par une partie du rotor 3. La pièce 28 comporte également une excroissance 281 à l'extrémité du au moins un bras radial, prévue pour supporter un connecteur électrique déporté raccordé au circuit 25' en remplacement du connecteur 251.

Dans l'exemple illustré, l'excroissance 281 s'étend parallèlement à l'axe X en faisant saillie depuis un bras radial et en étant décalée radialement par rapport à l'axe X. L'excroissance 281 s'étend vers un orifice de connexion correspondant formé dans le bol 26. Des pistes conductrices (non représentées) sont prévues et s'étendent à l'intérieur de l'excroissance 281 et du bras radial la supportant. Ces pistes conductrices sont reliées au circuit 25' et aux capteurs 14 montés sur le PCB.

Comme illustré sur la figure 8, la pièce de support 23' comporte un corps 231 pourvu d'un orifice central 232' élargi par rapport à l'orifice 232 pour permettre le passage d'au moins une partie du circuit imprimé 25'. Par exemple, l'orifice central 232' présente une forme complémentaire à la forme du circuit imprimé 25', plus précisément à la forme d'un substrat rigide du circuit imprimé 25'. On comprend ainsi que, dans une configuration assemblée du stator 2', le circuit imprimé 25' est partiellement, de préférence totalement, reçu à l'intérieur de l'orifice 232'. Des parois de maintien 291 du circuit 25' sont prévues à la base de la pièce de support 23', du côté opposé à celui de l'insertion du circuit 25' dans l'orifice 232'. Ainsi, dans une configuration montée de la pièce additionnelle 28 sur la pièce de support 23', le circuit 25' est retenu axialement entre la pièce additionnelle 28 et la pièce de support 23'.

Avantageusement, la pièce de support 23' comporte également au moins un doigt 292 de mise à distance par rapport au rotor 3. Ce ou ces doigts de mise à distance sont en saillie axialement par rapport à la face supérieure de la pièce de support 23' supportant les connecteurs 233, 233', 233". L'extrémité 293 de ces doigts 292 de mise à distance est en contact avec le roulement reçu dans le bol 26. Ainsi, les capteurs positionnés sur le circuit 25' sont à une distance du roulement prédéfinie par la hauteur des doigts de guidage.

Les lames recourbées 2332 et 2333 de chacun des connecteurs 233 de la pièce de support 23' sont ici tournées vers le centre du support 23. Le flasque 22' est modifié en conséquence. En particulier, le flasque 22' comporte, pour chacun des connecteurs 233, une patte 227' de fixation et des évidements 224 associés aux lames recourbées 2332 et 2333. Cet agencement des lames recourbées 2332 et 2333 peut néanmoins être mis en oeuvre indépendamment de la pièce 28 et de la forme décrite ci-dessus de la pièce de support 23'.

Mis à part ces différences, le rôle du flasque 22' est similaire au rôle du flasque 22 précédemment décrit. Notamment, le flasque 22' est monté solidaire sur une extrémité du stator 2' en étant en appui sur un paquet de tôles formant un corps creux du stator 2'. En particulier, le flasque 22' comprend d'une part une bague circulaire, laquelle vient se placer sur la périphérie externe des tôles formant le stator. Le flasque comprend également une pluralité de casquettes 294, maintenues à la bague du flasque par des ponts s'étendant depuis la bague du flasque vers l'intérieur de celle-ci. Les casquettes 294 ont une épaisseur sensiblement égale à celle des tôles du stator et une largeur équivalente aux éléments polaires du stator.

Les casquettes 294 forment ainsi des portions d'extrémité ou prolongements des éléments polaires du stator. Les bobines du stator sont chacune formée par l'enroulement d'un fil électriquement conducteur autour d'un élément polaire et de casquettes de part et d'autre de cet élément polaire.

La pièce de support 23' est maintenue en appui sur les casquettes 294. Alternativement à un montage de la pièce de support 23' sur le flasque par clippage à l'aide des pattes de fixation 227', la pièce de support peut être montée uniquement indexée en rotation par rapport au flasque. Elle est ensuite maintenue par assemblage (simple empilement de pièces) entre le flasque et le roulement rapporté dans le bol 26, lors du montage du bol 26 sur le flasque et le stator.

Ce deuxième mode de réalisation permet notamment d'offrir un meilleur positionnement axial des capteurs montés sur le circuit imprimé 25' par rapport aux aimants du rotor, en réduisant la chaîne de côte et en simplifiant le procédé d'assemblage du moteur 1'. En effet, le roulement étant rapporté à une distance prédéfinie sur un arbre du rotor, les capteurs positionnés sur le circuit 25' se trouvant à une distance du roulement prédéfinie par la hauteur des doigts de guidage, sont donc à une distance prédéfinie du rotor, garantie par le positionnement du roulement sur l'axe du rotor.

Les modes de réalisation et les variantes envisagés ci-dessus peuvent être combinés entre eux pour générer de nouveaux modes de réalisation.

## Revendications

1. Moteur électrique (1 ; 1') synchrone, comprenant un stator (2 ; 2') de forme tubulaire et un rotor (3) mobile en rotation à l'intérieur du stator (2 ; 2') autour d'un axe de rotation (X) coaxial avec le stator (2 ; 2'), le stator (2 ; 2') comportant deux extrémités et incluant des bobines (21A, 21A', 21B, 21B', 21C, 21C') formées chacune par enroulement d'un fil électriquement conducteur, le stator (2 ; 2') comporte :
- un flasque (22 ; 22') monté solidaire sur une des extrémités du stator (2 ; 2') en étant en appui sur un paquet de tôles formant un corps creux du stator (2 ; 2') ;
- une pièce de support (23) électriquement isolante, fixée au flasque et pourvue de connecteurs électriques (233, 233', 233"), incluant chacun une cosse d'alimentation (2331, 2331', 2331") et deux lames recourbées (2332, 2333, 2332', 2333', 2332", 2333") en lien électrique avec la cosse d'alimentation correspondante, les lames recourbées de chaque élément de connexion étant chacune connectée électriquement à une portion d'extrémité de fil d'une bobine, chaque connecteur (233, 233', 233") formant un point de connexion commun entre deux bobines (21A, 21A', 21B, 21B', 21C, 21C') associées à des phases électriques d'alimentation différentes du moteur (1, 1'),
**caractérisé en ce que** le moteur électrique comporte en outre un circuit imprimé (25 ; 25') dont un substrat rigide est intercalé entre la pièce de support (23 ; 23') et le flasque (22 ; 22').

2. Moteur électrique selon la revendication 1, **caractérisé en ce que** le circuit imprimé (25') est au moins en partie reçu à l'intérieur d'un orifice central (232') de la pièce de support (23').

3. Moteur électrique selon la revendication 1 ou la revendication 2, **caractérisé en ce qu'**il comporte une pièce additionnelle (28) de support du circuit imprimé (25') intercalée entre la pièce de support (23') et un bol d'extrémité (26), la pièce additionnelle étant pourvue d'une excroissance (281) prévue pour supporter un connecteur électrique déporté raccordé au circuit imprimé (25').

4. Moteur électrique selon l'une quelconque des revendications précédentes, **caractérisé en ce que** les bobines (21A, 21A', 21B, 21B', 21C, 21C') sont connectées électriquement entre elles selon un montage en triangle.

5. Moteur électrique selon l'une quelconque des revendications précédentes, **caractérisé en ce que** les connecteurs (233, 233', 233") sont disposés sur le pourtour de la pièce de support (23 ; 23') en étant séparés d'un angle de 120° les uns par rapport aux autres.

6. Moteur électrique selon l'une quelconque des revendications précédentes, **caractérisé en ce que** la pièce de support (23 ; 23') est fixée au flasque (22 ; 22') par encliquetage, le flasque et la pièce de support comprenant à cet effet des organes de fixation (227, 235 ; 227') de formes complémentaires.

7. Moteur électrique selon l'une quelconque des revendications précédentes, **caractérisé en ce que** la pièce de support (23 ; 23') est en appui sur un bord d'extrémité du flasque (22 ; 22').

8. Procédé de fabrication d'un moteur électrique (1) synchrone conforme à la revendication 1, ce moteur comprenant un stator (2 ; 2') de forme tubulaire et un rotor (3) mobile en rotation à l'intérieur du stator (2 ; 2') autour d'un axe de rotation (X) coaxial avec le stator (2 ; 2'), ce procédé comporte des étapes de :
a) fourniture d'un stator (2 ; 2') pourvu d'un flasque (22 ; 22') monté solidaire sur une des extrémités du stator (2 ; 2') en étant en appui sur un paquet de tôles formant un corps creux du stator (2 ; 2') ;
b) enroulement (100) de fils électriquement conducteurs pour former des bobines (21A, 21A', 21B, 21B', 21C, 21C') à l'intérieur du stator (2 ; 2');
c) fixation (102 ; 104) d'une pièce de support (23 ; 23') électriquement isolante sur le flasque (22 ; 22'), cette pièce de support (23 ; 23') étant pourvue de connecteurs électriques (233, 233', 233") incluant chacun une cosse d'alimentation (2331, 2331', 2331") et deux lames recourbées (2332, 2333, 2332', 2333', 2332", 2333") en lien électrique avec la cosse d'alimentation, chaque lame recourbée étant positionnée en regard d'une portion d'extrémité (211A, 211A', 211B, 211B', 211C, 211C') de fil d'une bobine pour enserrer cette portion de fil;
d) connexion (106) électrique de chaque lame recourbée (2332, 2333, 2332', 2333', 2332", 2333") à la portion d'extrémité (211A, 211A', 211B, 211B', 211C, 211C') enserrée, chaque connecteur (233, 233', 233") formant un point de connexion commun entre deux bobines (21A, 21A', 21B, 21B', 21C, 21C') associées à des phases électriques d'alimentation différentes du moteur (1, 1'),
**caractérisé en ce que** le procédé comprend une étape d'ajout d'un circuit imprimé (25 ; 25') avant l'étape de fixation de la pièce de support (23) au flasque (22), un substrat rigide du circuit imprimé (25 ; 25') étant intercalé entre la pièce de support (23 ; 23') et le flasque (22 ; 22').

9. Procédé de fabrication selon la revendication 8, **caractérisé en ce qu'**il comprend une étape de fixation d'un bol (26) au stator, les cosses d'alimentation dépassant au travers du fond du bol (26) lorsque celui-ci est monté sur le stator.

## Patentansprüche

1. Synchroner Elektromotor (1; 1'), umfassend einen rohrförmigen Stator (2; 2') und einen Rotor (3), der im Inneren des Stators (2; 2') um eine zum Stator (2; 2') koaxiale Drehachse (X) drehbeweglich ist; der Stator (2; 2') umfassend zwei Enden und beinhaltend Spulen (21A, 21A', 21B, 21B', 21C, 21 C'), die jeweils durch Wickeln eines elektrisch leitenden Drahts gebildet sind, wobei der Stator (2; 2') Folgendes umfasst:
- einen Flansch (22; 22'), der fest an einem der Enden des Stators (2; 2') montiert ist, indem er sich auf einem Blechpaket abstützt, das einen Hohlkörper des Stators (2; 2') bildet;
- ein elektrisch isolierendes Trägerteil (23), das an dem Flansch befestigt und mit elektrischen Verbindern (233, 233', 233") versehen ist, die jeweils einen Stromversorgungsanschluss (2331, 2331', 2331") und zwei gebogene Lamellen (2332, 2333, 2332', 2333', 2332", 2333") in elektrischer Verbindung mit dem entsprechenden Stromversorgungsanschluss umfassen, wobei die gebogenen Lamellen von jedem Verbindungselements jeweils elektrisch mit einem Drahtendabschnitt einer Spule verbunden sind, wobei jeder Verbinder (233, 233', 233") einen gemeinsamen Verbindungspunkt zwischen zwei Spulen (21A, 21A', 21B, 21B', 21C, 21 C') bildet, die mit unterschiedlichen elektrischen Versorgungsphasen des Motors (1, 1') verbunden sind,
**dadurch gekennzeichnet, dass** der Elektromotor ferner eine Leiterplatte (25; 25') umfasst, wovon ein starres Substrat zwischen das Trägerteil (23; 23') und den Flansch (22; 22') eingefügt ist.

2. Elektromotor nach Anspruch 1, **dadurch gekennzeichnet, dass** die Leiterplatte (25') zumindest teilweise innerhalb einer mittleren Öffnung (232') des Trägerteils (23') aufgenommen ist.

3. Elektromotor nach Anspruch 1 oder 2, **dadurch gekennzeichnet, dass** er ein zusätzliches Teil (28) zum Tragen der Leiterplatte (25') umfasst, das zwischen das Trägerteil (23') und eine Endschale (26) eingefügt ist, wobei das zusätzliche Teil mit einer Ausstülpung (281) versehen ist, die bereitgestellt ist, um einen abgesetzten elektrischen Verbinder zu tragen, der mit der Leiterplatte (25') verbunden ist.

4. Elektromotor nach einem der vorherigen Ansprüche, **dadurch gekennzeichnet, dass** die Spulen (21A, 21A', 21B, 21B', 21C, 21 C') in einer Dreiecksschaltung elektrisch miteinander verbunden sind.

5. Elektromotor nach einem der vorherigen Ansprüche, **dadurch gekennzeichnet, dass** die Verbinder (233, 233', 233") in einem Winkel von 120° um den Umfang des Trägerteils (23; 23') voneinander beabstandet angeordnet sind.

6. Elektromotor nach einem der vorherigen Ansprüche, **dadurch gekennzeichnet, dass** das Trägerteil (23; 23') durch Einrasten an dem Flansch (22; 22') befestigt ist, wobei der Flansch und das Trägerteil zu diesem Zweck Befestigungselemente (227, 235; 227') mit komplementären Formen umfassen.

7. Elektromotor nach einem der vorherigen Ansprüche, **dadurch gekennzeichnet, dass** das Trägerteil (23; 23') an einem Endrand des Flanschs (22; 22') anliegt.

8. Verfahren zur Herstellung eines synchronen Elektromotors (1) nach Anspruch 1, dieser Motor umfassend einen rohrförmigen Stator (2; 2') und einen Rotor (3), der im Inneren des Stators (2; 2') um eine zum Stator (2; 2') koaxiale Drehachse (X) drehbar ist, wobei dieses Verfahren die folgenden Schritte umfasst:
a) Bereitstellen eines Stators (2; 2'), der mit einem Flansch (22; 22') versehen ist, der fest an einem der Enden des Stators (2; 2') montiert ist, indem er sich auf einem Blechpaket abstützt, das einen Hohlkörper des Stators (2; 2') bildet;
b) Wickeln (100) elektrisch leitender Drähte, um Spulen (21A, 21A', 21B, 21B', 21C, 21 C') innerhalb des Stators (2; 2') zu bilden;
c) Befestigen (102; 104) eines elektrisch isolierenden Trägerteils (23; 23') an dem Flansch (22; 22'), wobei dieses Trägerteil (23; 23') mit elektrischen Verbindern (233, 233', 233") versehen ist, die jeweils einen Stromversorgungskabelschuh (2331, 2331', 2331") und zwei gebogene Lamellen (2332, 2333, 2332', 2333', 2332", 2333") in elektrischer Verbindung mit dem Stromversorgungskabelschuh beinhalten, wobei jede gebogene Lamelle gegenüber einem Endabschnitt (211A, 211A', 211B, 211B', 211C, 211C') eines Drahts einer Spule positioniert ist, um diesen Drahtabschnitt zu umschließen;
d) elektrische Verbindung (106) von jeder gebogenen Lamelle (2332, 2333, 2332', 2333', 2332", 2333") mit dem eingeklemmten Endabschnitt (211A, 211A', 211B, 211B', 211C, 211C'), wobei jeder Verbinder (233, 233', 233") einen gemeinsamen Verbindungspunkt zwischen zwei Spulen (21A, 21A', 21B, 21B', 21C, 21 C') bildet, die mit unterschiedlichen elektrischen Versorgungsphasen des Motors (1, 1') assoziiert sind,
**dadurch gekennzeichnet, dass** das Verfahren einen Schritt eines Hinzufügens einer Leiterplatte (25; 25') vor dem Schritt eines Befestigens des Trägerteils (23) an dem Flansch (22) umfasst, wobei ein starres Substrat der Leiterplatte (25; 25') zwischen das Trägerteil (23; 23') und den Flansch (22; 22') eingefügt wird.

9. Herstellungsverfahren nach Anspruch 8, **dadurch gekennzeichnet, dass** es einen Schritt eines Befestigens einer Schale (26) an dem Stator umfasst, wobei die Stromversorgungskabelschuhe durch den Boden der Schale (26) hervorstehen, wenn diese an dem Stator montiert ist.

## Claims

1. A synchronous electric motor (1; 1'), comprising a tubular stator (2; 2') and a rotor (3) rotating inside the stator (2; 2') about an axis of rotation (X) coaxial with the stator (2; 2'), the stator (2; 2') having two ends and including coils (21A, 21A', 21B, 21B', 21C, 21C') each formed by winding an electrically conductive wire,
the stator (2; 2') includes:
- a flange (22; 22') securely mounted on one of the ends of the stator (2; 2') while bearing on a stack of metal sheets forming a hollow body of the stator (2; 2');
- an electrically insulating support part (23), secured to the flange and provided with electrical connectors (233, 233', 233"), each including a power supply terminal (2331, 2331', 2331") and two curved blades (2332, 2333, 2332', 2333', 2332", 2333") electrically connected with the corresponding power supply terminal, the curved blades of each connection element each being electrically connected to an end portion of wire from a coil, each connector (233, 233', 233") forming a common connection point between two coils (21A, 21A', 21B, 21B', 21C, 21C') associated with different electrical power phases of the motor (1; 1').
**characterized in that** it further includes a printed circuit board (25; 25') whereof a rigid substrate is inserted between the support part (23; 23') and the flange (22; 22').

2. The electric motor according to claim 1, **characterized in that** the printed circuit board (25') is at least partially received inside a central orifice (232') of the support part (23').

3. The electric motor according to claim 1 or claim 2, **characterized in that** it includes an additional support part (28) of the printed circuit board (25') inserted between the support part (23') and an end bowl (26), the additional part being provided with a protuberance (281) provided to support an offset electrical connector connected to the printed circuit board (25').

4. The electric motor according to any one of the preceding claims, **characterized in that** the coils (21A, 21A', 21B, 21B', 21C, 21C') are connected electrically to one another according to a triangle assembly.

5. The electric motor according to any one of the preceding claims, **characterized in that** the connectors (233, 233', 233") are arranged on the perimeter of the support part (23; 23') while being separated by an angle of 120° relative to one another.

6. The electric motor according to any one of the preceding claims, **characterized in that** the support part (23; 23') is fastened to the flange (22; 22') by snapping, the flange and the support part to that end comprising fastening members (227, 235; 227') with complementary shapes.

7. The electric motor according to any one of the preceding claims, **characterized in that** the support part (23; 23') bears on an end edge of the flange (22; 22').

8. A method for manufacturing a synchronous electric motor (1) according to claim 1, this motor comprising a tubular stator (2; 2') and a rotor (3) rotatable inside the stator (2; 2') about an axis of rotation (X) coaxial with the stator (2; 2'), this method includes the following steps:
a) supplying a stator (2; 2') provided with a flange (22; 22') securely mounted on one of the ends of the stator (2; 2') while bearing on a stack of metal sheets forming a hollow body of the stator (2; 2');
b) winding (100) electrically conductive wires to form coils (21A, 21A', 21B, 21B', 21C, 21C') inside the stator (2; 2');
c) fastening (102; 104) an electrically insulating support part (23; 23') on the flange (22; 22'), this support part (23; 23') being provided with electrical connectors (233, 233', 233") each including a power supply terminal (2331, 2331', 2331") and two curved blades (2332, 2333, 2332', 2333', 2332", 2333") electrically connected with the power supply terminal, each curved blade being positioned across from a wire end portion (211A, 211A', 211B, 211B', 211C, 211C') of a coil to grip this wire portion;
d) electrically connecting (106) each curved blade (2332, 2333, 2332', 2333', 2332", 2333") to the gripped end portion(211A, 211A', 211B, 211B', 211C, 211C'), each connector (233, 233', 233") forming a common connection point between two coils (21A, 21A', 21B, 21B', 21C, 21C') associated with different electrical supply phases of the motor (1; 1'),
**characterized in that** the method comprises a step for adding a printed circuit board (25; 25') before the step for fastening the support part (23) to the flange (22), a rigid substrate for the printed circuit board (25; 25') being inserted between the support part (23; 23') and the flange (22; 22').

9. The manufacturing method according to claim 8, **characterized in that** it comprises a step for fastening a bowl (26) to the stator, the supply terminals protruding through the bottom of the bowl (26) when the latter is mounted on the stator.
